# EUROPEAN PATENT APPLICATION

(11) **EP 4 760 566 A1**
(43) Date of publication of application: **17.06.2026**
(21) Application number: 25221864.9
(22) Date of filing: 09.12.2025
(51) Int. Cl.: G06F 21/55, G06Q 20/40, H04L 9/40

(54) **METHOD FOR REAL-TIME RISK ANALYSIS FOR USERS OF AN ONLINE SERVICE**

(30) Priority: 12.12.2024 IT 202400028329
(71) Applicant: Cleafy Società per Azioni, 20123 Milano (MI) (IT)
(72) Inventor: Giangregorio, Carmine, 20123 Milano MI (IT); Pastore, Nicolò, 20123 Milano MI (IT)
(74) Representative: Perani & Partners S.p.A.

(57) **Abstract**

A method for real-time risk analysis for users of an online service 3, comprising the steps of: a) providing a traffic analysis system 1 in signal communication with a web server 2 on which the online service 3 resides; b) providing a predictive algorithm 4; c) extracting and structuring each event detected from the traffic analysis by monitoring the traffic analysis system 1; d) extracting from each event detected in step c) characteristic technical parameters; e) extracting from each event detected in step c) characteristic functional parameters; f) identifying each user 5 of the online service 3 when the latter performs an authentication operation to the online service 3 and/or by detecting an anonymous user by predicting their identity when the latter is about to authenticate to the online service 3; g) identifying a real risk condition for a user identified in step f); h) for each real risk condition identified in step g), generating by means of the predictive algorithm 4 a connection graph between one or more potentially correlated users identified with the same user for whom a real risk condition has been identified; i) predicting a potential risk condition for the one or more potentially correlated users identified with the user for whom a real risk condition has been identified, by means of the predictive algorithm 4 as a function of the connection graph generated in step h).

## Description

### FIELD OF APPLICATION

The present invention relates to a method for real-time risk analysis for users of an online service, such as an application.

In detail, the risk analysis method of the invention provides for the real-time categorization and correlation of users, based on the joint analysis of technical characteristics, behavioral anomalies, and deterministic evidence of risk.

### Description of the prior art

In the context of risk analysis relating to single users, understood both as physical users and user accounts within an application, it is common practice, at the level of Cyber Threat Intelligence analysis, to search for connections between different users, in order to identify potential anomalies or situations of probable or certain risk. This type of analysis is carried out by highly trained analysts with in-depth knowledge of Cyber Threat Intelligence.

Retroactive analyses of fraud cases or at-risk users are conducted by making direct or indirect connections based on various characteristics of the single entities involved, such as a user account, which can be integrated with external threat intelligence feeds, such as lists of compromised users who are victims of phishing, data leaks, blacklists of IBANs, IPs reported as at-risk, compromised VPNs or ISPs, etc.

In the field of risk analysis for the prevention of online fraud, systems that attempt to identify malicious activities are known.

The document US 22021/160281 A1 describes a system for the detection of phishing events based on an automatic luring process called baiting. This system inserts fictitious user credentials, known as bait credentials, into known phishing sites. When a malicious actor uses such credentials on a legitimate site, the system identifies and redirects them to a controlled environment, called a sandbox, to record their behavior and create a digital fingerprint of the malicious interaction. This fingerprint is then used to classify other sessions as suspicious.

The document US 2015/026027 A1 describes a fraud detection system based on Dynamic Account Modeling, which creates a predictive model of a single user's behavior to identify anomalous and suspicious activities compared to their history.

The document US 2024/195828 A1, in turn, describes a system that builds identity profiles based on data collected from a vast coalition of online service providers, in order to calculate a risk score for a given user interaction.

### Problem of the prior art

In the prior art, the risk analysis performed by highly specialized analysts requires considerable resources both in terms of the quantity and quality of the data collected, such as all possible technical information relating to a user, the application used, the operations performed, etc., and in terms of the time taken by the analyst to perform this type of analysis.

In fact, this type of analysis is performed exclusively following a negative event such as, for example, a case of fraud reported by the user. Always downstream of the negative event, in-depth analyses are performed to identify, on the one hand, the causes that led to the fraud, such as malicious actors, malware, etc., and on the other hand, to look for possible connections to other users at risk of incurring the same type of fraud. For these reasons, in the prior art, analyses of this type cannot be performed for preventive purposes, both due to the impossibility of scaling this approach to a large number of users and due to the quantity and quality of resources required.

Furthermore, the analysis of the aforementioned prior art documents reveals that the known art suffers from some significant limitations. In particular, the system described in US 2021/160281 A1 is intrinsically reactive and specialized. Its operation depends on the use of predefined bait credentials by a malicious person, limiting its main field of application to the detection of phishing fraud and making it less effective against other types of threats such as scams, identity theft from data breaches, or malware attacks that do not directly involve the bait credentials.

In addition, the known methods from the aforesaid documents focus on classifying the risk of a single session or a single user in isolation, based on their past behavior (as in US 2015/026027 A1) or by comparing their activity with a known fraud fingerprint (as in US 2021/160281 A1). The prior art lacks a mechanism capable of propagating risk in a predictive and proactive manner among different but potentially correlated users.

None of the cited documents describe the generation of a dynamic connection graph that, based on the correlation of both technical (e.g., IP, device fingerprint) and functional (e.g., IBAN, email) parameters, can identify potentially at-risk users before they suffer an attack, simply because they share a parameter with a user whose session presents a risk condition.

### SUMMARY OF THE INVENTION

The object of the present invention is to provide a method for real-time risk analysis in a web application, capable of overcoming the drawbacks of the prior art.

The present invention has the objective of automating the entire user analysis process, obviously going far beyond the concept of mere aromatization [Translator's Note: The term 'aromatizzazione' is unusual in this context. It literally means 'aromatization' or 'flavoring'. It seems to be used metaphorically to mean a simple, surface-level enhancement or imitation of a human mental process. Given the context of automating a human process, 'emulation' or 'imitation' would be standard terms, but the translation retains a literal rendering to flag the unusual wording.] of a human mental process, guaranteeing the obtaining of results in near real-time, i.e., in real time, so as to be able to integrate the risk analysis results for the web application within an automated anti-fraud system.

The purpose of the present invention is therefore to overcome the limits of the prior art, providing a risk analysis method that is proactive and predictive, and not merely reactive.

A fundamental objective is to create a system capable of identifying and preventing fraud across a broad spectrum of threats (multi-threat) and, above all, of propagating the risk assessment among correlated users via shared technical and functional parameters, thus protecting users who have not yet been directly attacked.

This object is achieved by means of a real-time risk analysis method as described in claim 1.

### Advantages of the invention

Thanks to an embodiment, it is possible to obtain a method for real-time risk analysis in a web application, which therefore allows preventing the risks of fraud.

The main advantage of the method according to the invention consists in the fact that, by generating a connection graph based on the joint processing of technical and functional parameters, it is possible to obtain a technical effect not achievable with the known methods: the prediction of a potential risk condition for users who, although not directly involved in a suspicious activity, are correlated to an at-risk user. This approach transforms the risk analysis from a reactive classification activity to a proactive prevention activity.

For example, while US 2021/160281 A1 is limited to identifying sessions similar to a fraud that has already occurred, the method proposed herein allows a user to be labeled as at-risk not because their behavior is identical to that of a fraudster, but because they share an IP address, a device, or an IBAN with another session that has been identified as risky for any reason (e.g., phishing victim, use of a mule account, credentials exposed in a data breach). This advantageously allows blocking the user or implementing countermeasures (phase 1) before the fraud materializes, a substantial technical advantage over the prior art.

### BRIEF DESCRIPTION OF THE DRAWINGS

The characteristics and advantages of the present invention will become apparent from the following detailed description of a possible practical embodiment, illustrated by way of non-limiting example in the set of drawings, in which:
- figure 1 shows a flowchart of the steps of a method according to the present invention,
- figure 2 shows an exemplary diagram of the architecture of a system for implementing the method of figure 1.

### DETAILED DESCRIPTION

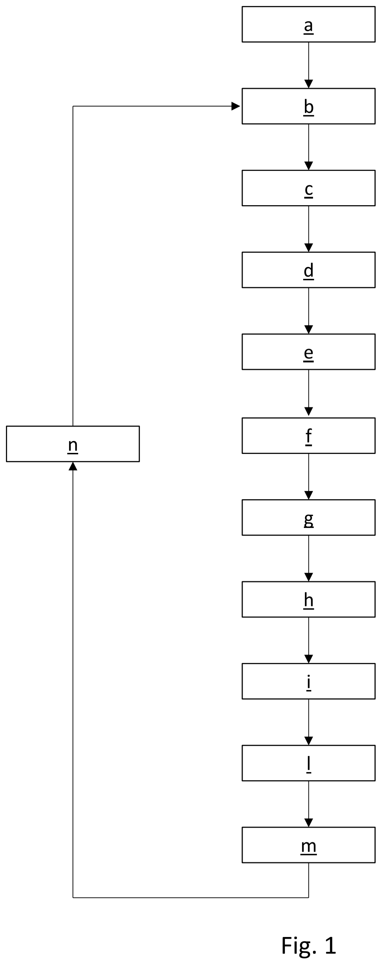

The present invention relates to a method for real-time risk analysis for users of an online service 3, illustrated in figure 1. In particular, the method of the invention allows a so-called risk analysis that provides for the real-time categorization and correlation of users, based on the joint analysis of technical characteristics, behavioral anomalies, and deterministic evidence of risk.

The method comprises the step a) of providing a traffic analysis system 1 in signal communication with a web server 2 on which the online service 3 resides.

The method further comprises the step b) of providing a predictive algorithm 4 residing in the traffic analysis system 1 and trained on a database of historical data relating to real risk cases encountered for the users of the online service 3.

The method comprises the step c) of extracting and structuring each event detected by the traffic analysis by monitoring the traffic analysis system 1. Preferably, extracting and structuring each event is also intended to mean generating an event, and in particular the data relating to said event, as a function of the parameters detected by the traffic analysis performed by the traffic analysis system 1.

The method additionally comprises the step d) of extracting from each event detected in step c) characteristic technical parameters by means of the traffic analysis system 1.

Furthermore, the method comprises the step e) of extracting from each event detected in step c) characteristic functional parameters by means of the traffic analysis system 1.

The method also comprises the step f) of identifying each user 5 of the online service 3 associated with each event extracted and structured in step c), by means of the traffic analysis system 1, by detecting an authenticated user when the latter performs an authentication operation to the online service 3 by entering user credentials and/or by detecting an anonymous user by predicting their identity when the latter is about to authenticate to the online service3. It should be noted that systems and methods for identifying a user during the authentication phase are known, that is, when the latter performs the authentication with user credentials. Systems and methods for predicting the identity of an anonymous user connected to an online service 3 before the user themselves has entered their user credentials are also known. As such methods are known, they will not be described herein in detail.

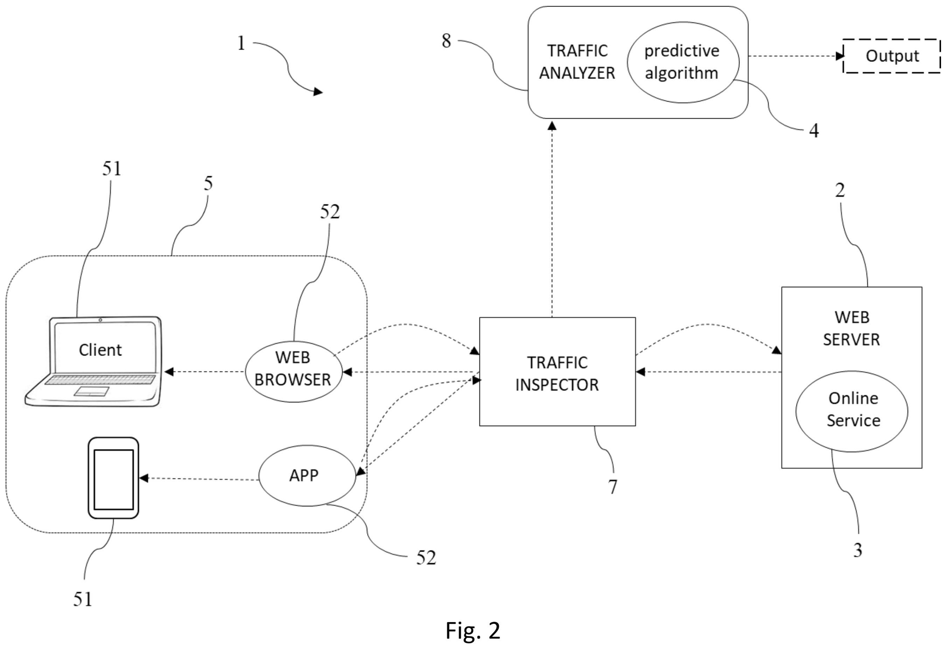

Preferably, with reference to figure 2, the traffic analysis system 1 is configured as a known type of architecture and comprises a traffic inspector 7 in signal communication with the web server 2 on which the online service 3 resides, i.e., the application such as a Web application, and a traffic analyzer 8 in signal communication with the traffic inspector 7. Further preferably, the predictive algorithm 4 resides in the traffic analyzer 8. Each event related to the traffic between each user 5 and the online service 3 is extracted by means of the traffic inspector 7. Each user 5 uses a client device 51, such as a PC, tablet or smartphone, to access and connect to the online service 3 by means of a web browser and/or a mobile application 52.

The method comprises the further step g) of identifying a real risk condition for a user identified in step f) when a risk is detected for one or more selected from the user themselves, the characteristic technical parameters, and the characteristic functional parameters, as a function of the type of event extracted and structured in step c) and of the type of online service 3. It should be noted that the type of online service 3, such as a home banking service, is characterized by specific security measures and criteria and by specific technical and functional parameters.

The method also comprises step h) which provides, for each real risk condition identified in step g), for generating by means of the predictive algorithm 4 a connection graph between one or more potentially correlated users identified with the same user for whom a risk condition [Translator's Note: The original term "conduzione di rischio" (literally "conduct of risk") appears to be a typographical error for "condizione di rischio" (risk condition), which is used consistently elsewhere in the document (e.g., in step g). The translation uses "risk condition" for clarity and consistency.] has been identified, and preferably with the browsing session and/or the device 51, by processing the characteristic technical parameters and the characteristic functional parameters. In other words, this step has as its object the propagation of risk from one user to another based on the connections of the characteristic technical parameters and the characteristic functional parameters of the various users.

The method further provides for step i) of predicting a potential risk condition for the one or more potentially correlated users identified with the user for whom a real risk condition has been identified, by means of the predictive algorithm 4, as a function of the connection graph generated in step h). This step defines the output of the method in its most generic form. In fact, on the basis of this output, as will be described below, specific countermeasures can be undertaken to address the predicted risk condition for certain users. In other words, especially in steps h) and i), if a user A is identified as an at-risk user for one or more situations that may occur, e.g., phishing, a user marked as a scam victim, a payment sent to a mule or blacklisted IBAN, etc. If this situation has been verified through the characteristic technical and/or functional parameters, and if user A in turn has a graph connection with another user B, C, D, etc., then these latter are also classified as at-risk users, since even if there are no direct connections between A and the individual other users B, C, D, the latter are nevertheless correlated to A via one or more characteristic technical and/or functional parameters.

According to a preferred form of the invention, step g) of identifying a real risk condition for a user provides for verifying one or more of the following conditions: i) if the user is contained in a list of users reported as phishing victims (see example A); ii) if the user is contained in a list of users reported as scam victims (see example B); and iii) in case of transactions to/from IBANs in blacklists or Mule accounts (see example C).

Preferably, step g) of identifying a real risk condition for a user provides for one or more of the following:
- verifying if the user's credentials have been found in a data breach,
- verifying if one or more of the characteristic technical parameters of the event and/or one or more technical characteristics of the user is potentially compromised,
- verifying if one or more of the characteristic functional parameters of the event and/or one or more functional characteristics of the user is potentially suspicious.

More preferably, these verification steps can be performed, for example, if it is detected that the user is using a bait credential used as a phishing honeypot (example A described below).

Always preferably, the step of verifying if one or more of the characteristic technical parameters of the event and/or one or more technical characteristics of the user is potentially compromised, provides for identifying one or more of the following conditions: i. the IP is in a threat intelligence blacklist, ii. the Internet Service Provider used by the user is considered at risk, iii. the eventual VPN used by the user is compromised, iv. the device 51 used by the user has been reported as lost, stolen or compromised by malware.

Further preferably, the step of verifying if one or more of the characteristic functional parameters of the event and/or one or more functional characteristics of the user is potentially suspicious; provides for identifying one or more of the following conditions: i. the destination IBAN of a payment order is contained in a blacklist of IBANs reported as mule accounts, ii. a user's registration email uses a domain reported as suspicious.

According to a preferred solution, the method comprises one or more of the following steps: 1) as a function of the type of online service 3 monitored, executing automatic protection rules, such as preferably one or more of blocking the user, reporting suspicious operations to shared threat intelligence systems, such as more preferably an interbank risk bureau; m) uniting multiple groups of users and detecting possible further connections between one or more users outside the single monitored online service 3 by sharing the connection graph generated in step h) with a multi-tenant threat intelligence system.

According to a preferred form, the method also comprises step n) of continuously training the predictive algorithm on historical data, as in the prior art, by storing in the historical data database all the data collected during the execution of steps a) to m) of the method.

According to a preferred form of the invention, step h) provides for generating the connection graph also by analyzing single parameters collected by the traffic analysis system 1 and joining them with a reputation system, such as preferably an on-demand reputation service for a predetermined IP address or for a predetermined IBAN.

In accordance with a preferred form, each event detected in step c) is related to one selected from an authentication operation of a user to the online service 3, the creation of a new session on the online service 3, the change of the browser 52 or of the mobile device 51 used by a user, the insertion of a payment order.

Preferably, the characteristic technical parameters extracted in step d) comprise one or more selected from the date and time an event was generated, the source IP, the values of tracking cookies inserted and managed by the traffic analysis system 1, any application tracking cookies external to the traffic analysis system 1, the fingerprint of the device 51 used by a user, and the user agent used by a user.

Further preferably, the characteristic functional parameters extracted in step e) comprise one or more selected from the destination or source IBAN of a payment order, the username or user account used for a user authentication operation, a telephone number entered by a user in their profile or registration email in the case of a new user registration, the destination bank branch and/or the name of the beneficiary in the case of a payment order.

Hereinafter, some examples of execution of the method of the invention are reported with reference to real cases of fraud and/or at-risk users and the relative analysis that led to identifying the case.

EXAMPLE A Example A: Phishing victims detected via honeypot.
- A phishing honeypot proceeds to insert a bait credential within a phishing site, detected based on the analysis of threat intelligence feeds or through direct reports. This bait credential is stored in a database that associates it with the phishing website where it was inserted.
- Based on the traffic analysis, a session is detected in which the bait credential inserted into the honeypot is used. This session is identified automatically and all its tracking data, for example, source IP, tracking cookies, etc., are stored in a database associating it with the relative bait credential.
- A real user accesses the web application, and the traffic analysis system verifies that one or more tracking data points coincide with those stored during the traffic analysis, for example, they come from the same IP. This indicates that this user has, with high probability, been a victim of phishing as they have entered their credentials into the phishing website, and now the same attacker who tried to verify the bait credentials at point 2 is using a new user account collected through the phishing website. The system, therefore, flags the user account as high-risk and can predictively block the user account, contact the user, or implement Strong Customer Authentication procedures. In the same way, the real-time method will identify other user accounts that are connected to the same malicious actor, for example, the same source IP, by flagging all users connected to each other as at-risk.

EXAMPLE B Example B: Fraud victims detected through threat intelligence feeds.
- Based on the traffic analysis, a session is detected in which a user, who has correctly performed an authentication, performs an operation.
- The system verifies that one or more characteristic values of this session, such as, for example, the source IP, the destination bank account, etc., and compares them with a series of threat intelligence feeds, detecting for example that the destination bank account has been reported as at risk as it is known to be a mule account, i.e., a bank account used by a malicious actor, such as a fraudster or an organized group of fraudsters, to transfer and launder money.
- The method proceeds to flag the operation as high-risk, as it is anomalous for a user to perform a payment operation of this type; it is very probable that: a. the user has been a victim of a scam, where a fraudster using social engineering techniques convinced the user to make this payment, b. or, the user's device is infected with malware that modifies the destination address of a legitimate operation, for example an ATS (Automated Transfer System), c. or, the user has been a victim of phishing and subsequent Account Take-Over, and the operation is carried out by a malicious actor or fraudster using the credentials collected through phishing websites, d. or several other potential cases of user compromise.
- The method therefore proceeds to flag the user account and, in real-time, seeks connections with other application user accounts linked by one or more characteristics to the high-risk user, for example:
- it is detected that the user's IP is shared with other user accounts: this means that probably the same malicious actor is using the same IP to perform operations on behalf of other victims of Account Take-Over,
- or, as above, but instead of the IP, it is verified that the tracking cookies inserted by the traffic monitoring system are identical for multiple users,
- or, as above, but the device fingerprint is identical or the device analysis reveals other types of technical anomalies, such as, for example, that it is a compromised mobile device.

EXAMPLE C Example C: At-risk fraud users detected through data breach feeds.
- The traffic analysis system detects the authentication of a user whose credentials have been found in a data breach feed, i.e., a series of at-risk credentials as they were found in a data breach.
- The user is inserted into a list of at-risk users, and the characteristic parameters/values of the session in which the authentication was detected, such as, for example, the IP, the device fingerprint, the tracking cookies, etc., are inserted into a database associating them with the user account and the data breach feed.
- Subsequently, every further session in which one or more characteristic values coincide with those of the previous point, for example, from the same IP or the same device, is monitored and any authentications of other user accounts, even if not contained in the same data breach feed, are considered at risk as it is possible that a malicious actor has had access to the credentials from the data breach and is verifying their validity. The method can be further refined depending on the type of application monitored and the acceptable level of risk, for example:
- if the user's authentication is performed with exactly the same credentials collected in the data breach feed, and its characteristic values are different from its history, for example, the user accesses from a new device and/or a new IP, it is highly probable that it is not the real user attempting access but a malicious actor who is verifying the credentials. In this case, the user account can be automatically blocked or placed on a list of at-risk users where its operation is monitored and the execution of operations, such as a payment, is blocked,
- if in a short period of time a series of access attempts by multiple users, all present in a data breach feed, is detected, it is probable that a malicious actor is trying to verify all the user accounts collected from the data breach. In this case, all users are inserted into a list of at-risk users, regardless of the characteristic values of the session.

Advantageously, although the individual examples reported above present different fraud cases and with different potential causes, such as, for example, phishing victims, telephone scam victims, data breach victims, users reported as at-risk by shared threat intelligence feeds, etc., the entire solution of the proposed method is based on an approach of sharing risk among users, managed through the propagation of individual tracking values, to build a connection graph between users united by a potential threat or a unique series of threats.

To better illustrate the operation and advantages of the method according to the invention, particularly with regard to the steps of identifying a risk condition (step g), generating a connection graph (step h) and predicting a potential risk (step i), some non-limiting examples of practical application to different threat scenarios are reported below.

These examples demonstrate how the method, through the correlation of technical (e.g., IP address, device fingerprint) and functional (e.g., destination IBAN, email) parameters, is able to operate in a proactive and predictive manner, overcoming the limits of known systems that are based on reactive approaches or on single types of threats.

### Example 1: Phishing Risk Detection

Step g) Identification of Real Risk: The traffic analysis system (1) detects that a technical parameter, for example a specific IP address or a tracking cookie, has been previously associated with the use of a bait credential (honeypot) within a known phishing site. Subsequently, the system detects a standard browsing session of a real user, here called User A, who uses the same identical technical parameter (the same IP address or cookie). This coincidence defines a real risk condition for User A, as it indicates with high probability that the user has been a victim of the same phishing campaign.

Step h) Generation of the Connection Graph: The predictive algorithm (4) queries the historical data database to find other users who share the same technical parameter (IP address) as User A. A User B is identified who, despite having no other risk indicators, has recently connected from the same IP. A connection graph is thus generated.

Step i) Prediction of Potential Risk: Based on the graph, the system predicts a potential risk condition for User B. Even if User B has not yet suffered a direct attack, their correlation with User A (a confirmed phishing victim) makes them a probable target for the same malicious actor. The method allows applying preventive countermeasures (step 1) on User B, such as a temporary block or a request for enhanced authentication, before the fraud occurs. This approach is clearly distinct from that of US 2021/160281 A1, which is limited to creating a fingerprint of the attack to classify future sessions with identical characteristics, without propagating the risk to other correlated users in a predictive manner.

### Example 2: Scam Risk Detection (APP Fraud)

Step g) Identification of Real Risk: During the monitoring of a payment transaction performed by a User C, the system extracts a functional parameter, namely the destination IBAN. Through integration with a reputation system or a threat intelligence feed (step b), it is found that this IBAN is present in a blacklist of known mule accounts, i.e., accounts used to launder money. This correspondence identifies a very high real risk condition for the ongoing operation.

Steps h) and i) Generation of the Graph and Prediction: In this scenario, it is probable that User C is a victim of a social engineering scam (e.g., a phone scam that convinced them to make the payment). The system, in addition to flagging the operation as very high risk, generates a graph to verify if other technical parameters (e.g., the device 51) of User C have been used by other users to make payments to other suspicious IBANs, thus propagating the risk. This scenario shows how the invention is not limited to phishing, but can correlate functional parameters with external feeds to counter different types of fraud.

### Example 3: Account Take-Over (ATO) Detection

Step g): An authentication session is detected for a User D from an IP address which, from the analysis of the connection graph, appears to have an anomalous behavior (e.g., it has been used to attempt access to a high number of different accounts in a short period of time). The IP address itself becomes a high-risk technical parameter.

Steps h) and i): The system immediately propagates this risk condition to all other users who have had recent sessions originating from the same IP address, predicting a potential risk of ATO for them. This allows invalidating all sessions coming from that IP and alerting the involved users.

### Example 4: Risk Detection from Malware or Data Breach

Step g): A technical parameter (e.g., a device_id) of a User E is reported as compromised by an external feed (e.g., malware detection), or the credentials (functional parameter) of the same User E are found in a data breach.

Steps h) and i): In case of malware, the risk is propagated to all users who use the same device_id. In case of a data breach, when an access attempt with User E's credentials is detected, the system verifies other parameters: if the access occurs from a new device or a new IP, the risk is considered very high, as it is probable that a malicious person is testing the stolen credentials. The system can therefore block the access and notify the real user.

### Conclusion of the Examples

As illustrated, the entire solution of the proposed method is based on an approach of sharing risk among users, managed through the propagation of individual tracking values (technical and functional parameters), to build a connection graph between users united by a potential threat or a unique series of threats. This holistic and predictive approach constitutes a significant technical advancement compared to known systems, which are typically reactive and focused on single threats.

## Claims

1. A method for real-time risk analysis for users of an online service (3), comprising the steps of:
a) providing a traffic analysis system (1) in signal communication with a web server (2) on which the online service (3) resides;
b) providing a predictive algorithm (4) residing in the traffic analysis system (1) and trained on a database of historical data relating to real risk cases encountered for the users of the online service (3);
c) extracting and structuring each event detected from the traffic analysis by monitoring the traffic analysis system (1);
d) extracting from each event detected in step c) characteristic technical parameters by means of the traffic analysis system (1);
e) extracting from each event detected in step c) characteristic functional parameters by means of the traffic analysis system (1);
f) identifying each user (5) of the online service (3) associated with each event extracted and structured in step c), by means of the traffic analysis system (1), by detecting an authenticated user when the latter performs an authentication operation to the online service (3) by entering user credentials and/or by detecting an anonymous user by predicting their identity when the latter is about to authenticate to the online service (3);
**characterized in that** it comprises the steps of
g) identifying a real risk condition for a user identified in step f) when a risk is detected for one or more selected from the user themselves, the characteristic technical parameters, and the characteristic functional parameters, as a function of the type of event extracted and structured in step c) and of the type of online service (3);
h) for each real risk condition identified in step g), generating by means of the predictive algorithm (4) a connection graph between one or more potentially correlated users identified with the same user for whom a risk condition has been identified, by processing the characteristic technical parameters and the characteristic functional parameters;
i) predicting a potential risk condition for the one or more potentially correlated users identified with the user for whom a real risk condition has been identified, by means of the predictive algorithm (4), as a function of the connection graph generated in step h).

2. The method according to claim 1, wherein step g) of identifying a real risk condition for a user provides for verifying one or more of the following conditions:
• if the user is contained in a list of users reported as phishing victims,
• if the user is contained in a list of users reported as scam victims,
• in case of transactions to/from IBANs in blacklists or Mule accounts.

3. The method according to claim 1 or 2, wherein step g) of identifying a real risk condition for a user provides for one or more of the following:
• verifying if the user's credentials have been found in a data breach,
• verifying if one or more of the characteristic technical parameters of the event and/or one or more technical characteristics of the user is potentially compromised,
• verifying if one or more of the characteristic functional parameters of the event and/or one or more functional characteristics of the user is potentially suspicious.

4. The method according to claim 3, wherein the step of verifying if one or more of the characteristic technical parameters of the event and/or one or more technical characteristics of the user is potentially compromised provides for identifying one or more of the following conditions: i. the IP is in a threat intelligence blacklist, ii. the Internet Service Provider used by the user is considered at risk, iii. the eventual VPN used by the user is compromised, iv. the device (51) used by the user has been reported as lost, stolen or compromised by malware.

5. The method according to claim 3 or 4, wherein the step of verifying if one or more of the characteristic functional parameters of the event and/or one or more functional characteristics of the user is potentially suspicious provides for identifying one or more of the following conditions: i. the destination IBAN of a payment order is contained in a blacklist of IBANs reported as mule accounts, ii. a user's registration email uses a domain reported as suspicious.

6. The method according to any one of the preceding claims, comprising one or more of the following steps:
l) as a function of the type of online service (3) monitored, executing automatic protection rules, such as preferably one or more of blocking the user, reporting suspicious operations to shared threat intelligence systems, such as more preferably an interbank risk bureau; m) uniting multiple groups of users and detecting possible further connections between one or more users outside the single monitored online service (3) by sharing the connection graph generated in step h) with a multi-tenant threat intelligence system.

7. The method according to any one of the preceding claims, wherein step h) provides for generating the connection graph also by analyzing single parameters collected by the traffic analysis system (1) and joining them with a reputation system, such as preferably an on-demand reputation service for a predetermined IP address or for a predetermined IBAN.

8. The method according to any one of the preceding claims, wherein each event detected in step c) is related to one selected from an authentication operation of a user to the online service (3), the creation of a new session on the online service (3), the change of the browser (52) or of the mobile device (51) used by a user, the insertion of a payment order.

9. The method according to any one of the preceding claims, wherein the characteristic technical parameters extracted in step d) comprise one or more selected from the date and time an event was generated, the source IP, the values of tracking cookies inserted and managed by the traffic analysis system (1), any application tracking cookies external to the traffic analysis system (1), the fingerprint of the device (51) used by a user, and the user agent used by a user.

10. The method according to any one of the preceding claims, wherein the characteristic functional parameters extracted in step e) comprise one or more selected from the destination or source IBAN of a payment order, the username or user account used for a user authentication operation, a telephone number entered by a user in their profile or registration email in the case of a new user registration, the destination bank branch and/or the name of the beneficiary in the case of a payment order.
